# EUROPÄISCHE PATENTSCHRIFT

(11) **EP 3 222 647 B1**
(45) Veröffentlichungstag und Bekanntmachung des Hinweises auf die Patenterteilung: **17.10.2018**
(21) Anmeldenummer: 17000203.4
(22) Anmeldetag: 09.02.2017
(51) Int. Cl.: C08G 63/672, C08G 63/688, C11D 1/00, C11D 3/00, C11D 3/37

(54) **POLYESTER, VERFAHREN ZU DEREN HERSTELLUNG UND DEREN VERWENDUNG**
POLYESTER, METHOD FOR THEIR PREPARATION AND THEIR USE
POLYESTER, SON PROCÉDÉ DE FABRICATION ET D'UTILISATION

(30) Priorität: 22.03.2016 DE 102016003544
(43) Veröffentlichungstag der Anmeldung: 27.09.2017
(73) Patentinhaber: WeylChem Wiesbaden GmbH, 65203 Wiesbaden (DE)
(72) Erfinder: Barreleiro, Paula, 65462 Ginsheim (DE); Scholz, Hans Jürgen, 63755 Alzenau (DE); Schottstedt, Andreas, 65719 Hofheim (DE); Morschhäuser, Roman, 55122 Mainz (DE)
(74) Vertreter: Ackermann, Joachim

(56) Entgegenhaltungen:
- WO-A1-2011/063944
- DE-A1-102008 028 409

## Beschreibung

Die Erfindung betrifft ausgewählte Polyester, die sich als Zusätze zu Wasch- und Reinigungsmitteln eignen. Diese Polyester zeichnen sich durch ein sehr gutes Schmutzablösevermögen aus; sie sind gut wasserlöslich wenig hygroskopisch und von fester nicht klebriger Konsistenz.

Der Einsatz von Polyestern in Waschmitteln zur Verbesserung der Schmutzablösung von Textilien, zur Reduzierung der Wiederanschmutzung, zum Schutz der Fasern bei mechanischer Belastung und zum Ausrüsten der Gewebe mit einem Anti-Knittereffekt ist bekannt. Eine Vielzahl von Polyestertypen und deren Verwendung in Wasch- und Reinigungsmitteln sind in der Patentliteratur beschrieben.

US 4,702,857 A beschreibt Block-Copolyester aus Ethylenglykol, 1,2-Propylenglykol oder Mischungen daraus, Polyethylenglykol mit mindestens 10 Glykoleinheiten, das an einem Ende mit einer kurzkettigen Alkylgruppe, insbesondere mit einer Methylgruppe verschlossen ist, einer Dicarbonsäure bzw. einem Dicarbonsäureester und optional Alkalisalzen von sulfonierten aromatischen Dicarbonsäuren .

In US 4,427,557 A werden Polyester mit Molekulargewichten im Bereich von 2.000 und 10.000 g/mol beschrieben, die hergestellt sind aus den Monomeren Ethylenglykol, Polyethylenglykol mit Molekulargewichten von 200 bis 1000 g/mol, aromatischen Dicarbonsäuren und Alkalisalzen von sulfonierten aromatischen Dicarbonsäuren und gegebenenfalls aus geringen Mengen an aliphatischen Dicarbonsäuren, beispielsweise Glutarsäure, Adipinsäure, Bernsteinsäure, Pimelinsäure, Korksäure, Azelainsäure, Sebacinsäure und 1,4-Cyclohexandicarbonsäure und deren Anti-Knittereffekt und soil release Wirkung auf PolyesterGewebe oder auf Polyester-Baumwoll-Mischgewebe ausgelobt.

US 4,721,580 A offenbart Polyester mit Terephthalat-Einheiten und sulfohaltigen Endgruppen, insbesondere sulfoethoxylierte Endgruppen MO₃S(CH₂CH₂O)ₙ-H und lobt deren Verwendung in Waschmitteln und Weichspülmitteln aus.

US 4,968,451 A beschreibt Polyester mit sulfohaltigen Endgruppen, erhalten durch Copolymerisation von (Meth)allylalkohol, Alkylenoxid, Aryldicarbonsäure und C₂-C₄-Glykol und anschließender Sulfonierung.

In WO 96/18715 A2 werden Soil Release Polymere mit verzweigtem Rückgrat aus Di- oder Polyhydroxysulfonat mit mindestens 3 funktionellen Gruppen, bevorzugt abgeleitet von Glycerin, Terephthalat- und 1,2-Oxyalkylenoxy-Einheiten mit nichtionischen oder anionischen Endgruppen beschrieben.

In US 5,415,807 A wird dargelegt, dass Soil Release Polymere (SRP) mit sulfonierten Polyethoxy/Propoxy Endgruppen zur Kristallisation neigen, woraus eine Reduzierung der Soil Release Effekte resultiert. Die Schrift lehrt, dass die Kristallisationsneigung der SRP durch Zusatz von Hydrotropen aus der Gruppe der Alkylbenzolsulfonate, beispielsweise Natrium Dodecylbenzolsulfonat, Natriumcumolsulfonat, Natriumtoluolsulfonat, Natriumxylolsulfonat oder auch lineare oder verzweigte Alkylsulfonate mit 4 bis 20 Kohlenstoffatomen reduziert werden kann.

In US 5,691,298 werden Soil Release Polymer mit verzweigtem Rückgrat aus Di- oder Polyhydroxysulfonat, Terephthalat- und 1,2-Oxyalkylenoxy-Einheiten mit nichtionischen oder anionischen Endgruppen beansprucht, wobei die anionischen Endgruppen mehr als 2 Kohlenstoffatome enthalten.

DE199 06 367 A1 beschreibt die Verwendung von Kammpolymeren als Schmutzablösepolymere, die erhalten werden durch Kondensation von einer Polycarbonsäure oder einem Polyalkohol, einem oder mehreren gegebenenfalls durch Sulfogruppen substituierten Polyalkohol mit 2 bis 4 OH-Gruppen oder Polyglykolen der Formel HO-(XO)ₐ-H, worin X C₂H₄ und/oder C₃H₇ und a eine Zahl von 2 bis 35 bedeutet, einer oder mehreren C₂-C₁₀-Dicarbonsäuren und einer oder mehreren Verbindungen der Formeln NH₂R, NHR₂, ROH, R¹COOH, HO(XO)_{b}-H, HO(CH₂CH₂)_{d}SO₃K, worin R C₁-C₂₂-Alkyl oder C₆-C₁₀-Aryl, R¹ C₁-C₂₂-Alkyl, C₁-C₂₂-Sulfoalkyl, C₆-C₁₀-Aryl oder C₆-C₁₀-Sulfoaryl, X C₂H₄ und/oder C₃H₇, b eine Zahl von 3 bis 40, d eine Zahl von 1 bis 10, und K ein Kation bedeuten.

WO 98/05747 A1 beschreibt einen Prozess zur Herstellung von Granulaten enthaltend Polyester, die nicht-endverschlossen sind oder die an einem Ende oder an beiden Enden der Polymerkette Sulfoaroyl- oder sulfonierte Polyethoxy/Propoxy Endgruppen tragen können, sowie Alkylarylsulfonate oder Alkylsulfonate und ethoxylierte Fettalkohole. Die Kristallisationsneigung der Polyester ist reduziert und die Soil Release Wirkung ist verbessert.

US 5,599,782 A beschreibt feste Waschmittel enthaltend Polyester aus den Monomeren Sulfobenzoesäure, Dimethyltherephthalat, Dimethylsulfoisophthalat und Ethylenglykol, aber kein Propylenglykol oder höhere Glykole.

In WO 94/22937 A1 werden Waschmittel beschrieben, die sulfonierte Esteroligomere enthalten. Diese weisen Endgruppen auf, die ausgewählt sind aus Sulfobenzoyl- oder MO₃(CH₂)ₘ(CH₂CH₂O)(RO)ₙ-Gruppen, mit m gleich 1 oder 2, n gleich 0 bis 4 und R gleich Ethylen oder Propylen, sowie weitere Struktureinheiten abgeleitet von Terephthalat und Sulfoisophthalat sowie Ethylenglykol und/ oder Propylenglykol.

In EP 1 966 273 B1 werden Additive für Waschmittel mit Soil Release Eigenschaften beschrieben. Diese Additive basieren auf sulfonierten Alkylenisophthalat- und auf Alkylenterepthalat-Einheiten mit nichtionischen Alkylpolyglykol Endgruppen, wobei die Zahl der Glykoleinheiten in den Endgruppen fünf nicht überschreiten darf. Diese Additive zeigen ausgezeichnete Soil-Release Eigenschaften, neigen aber zur Feuchtigkeitsaufnahme, was deren Verarbeitbarkeit insbesondere beim Kompaktieren oder beim Granulieren erschwert.

WO 2011/063944 A1 entspreched EP 2 504 380 A1 lehrt Polyester, erhältlich durch Polymerisation einer oder mehrerer sulfogruppenfreien aromatischen Dicarbonsäuren oder deren Ester, optional einer oder mehreren sulfogruppenhaltigen Dicarbonsäuren oder deren Ester, 1,2-Propylenglykol (PO), Ethylenglykol (EO), wobei das Verhältnis PO zu EO > 1,7 beträgt, einer oder mehrerer Verbindungen der Formel R¹O(CHR²CHR³O)ₙH, wobei R¹ für eine lineare oder verzweigte, gesättigte oder ungesättigte Alkylgruppe mit 1 bis 22 C-Atomen steht, R² und R³ unabhängig voneinander für Wasserstoff oder für eine Alkylgruppe mit 1 bis 4 Kohlenstoffatomen stehen, und n eine Zahl von 1 bis 50 bedeutet, und optional eine oder mehrere Verbindungen der Formel H-(OCH₂CH₂)ₘ-SO₃X, wobei m eine Zahl von 1 bis 10 ist und X für Wasserstoff oder ein Alkalimetallatom steht. Diese Polyester zeichen sich dadurch aus, dass diese sich in Wasser gut lösen und/oder dispergieren, ausreichend hydrolysebeständig sind, in gelöster Form auch bei längerer Lagerung weitgehend eine dünnflüssige Konsistenz behalten und nicht zur Hygroskopizität neigen.

Schließlich sind aus DE 10 2008 028 409 A1 Verfahren zur Herstellung von Polyester-Granulaten bekannt, bei denen Polyesterschmelzen zu Pulvern mit ausgewählter Teilchengröße vermahlen werden und dieses Pulver anschließend zu Granulaten verarbeitet wird. In den Ausführungsbeispielen wird unter anderem ein Polyester beschrieben, der durch Umsetzung von Terephthalsäuredimethylether, 1,2-Propandiol, Ethylenglykol, Tetraethylenglykolmonomethylether, 5-Sulfoisophthalsäuredimethylester-Na-Salz und Na-Salz der Isethionsäure hergestellt wurde.

Bisher bekannte anionische Soil Release Polymere sind bezüglich Soil Release Wirkung, Wasserlöslichkeit, Dispergierbarkeit, Hydrolysestabilität und im Hinblick auf feste nicht klebrige Konsistenz nicht in vollem Umfang zufriedenstellend.

Bei tieferen Waschtemperaturen lösen sich diese Soil Release Polymere nicht oder nur unzureichend auf und verbleiben teilweise als weißlicher Rückstand auf der Wäsche. Zudem kommt das Schmutzablöseverhalten nicht voll zur Entfaltung.

Ein weiteres Problem ist die Hydrolyseneigung dieser Polymere in wässrigen Systemen, sowie die Ausfällung von SRP's oder die Phasenseparierung in flüssigen Zusammensetzungen, sowie eine klebrige oder aber kristalline, glasartig spröde Konsistenz dieser Polymere.

Bisher bekannte anionische Soil Release Polymere mit sulfohaltigen Gruppen zeichnen sich durch eine gute Wasserlöslichkeit aus, neigen jedoch zu Hygroskopizität und Klebrigkeit. Eine direkte Vermahlung der erkalteten Polyesterschmelze durch Hammer-, Sieb- oder so genannten Walzenstühle ist nicht möglich. Die hohe Aufnahme von Wasser während des Mahlprozesses führt zu Verklebungen und damit zum Zusammenbruch des kontinuierlichen Betriebes. Auch wenn durch spezielle, energieintensive Verfahren, wie Tieftemperaturvermahlung (Kryo-Vermahlung) bzw. Sprühtrockenverfahren aus wässriger Lösung akzeptable Ergebnisse erzielt werden können, bleibt die Lagerstabilität der anionischen SRP-Granulate aufgrund des Wasseraufnahmevermögens eingeschränkt.

Die Aufgabe der vorliegenden Erfindung bestand in der Bereitstellung anionischer Polyester, die gut wasserlöslich und/oder dispergierbar sind, gute soil-release Wirkung und hohes Dispergiervermögen zeigen, die ausreichend hydrolysestabil sind, die kompatibel mit in Wasch- und Reinigungsmitteln gängigen Zusatz- und Hilfsstoffen sind und die durch Vermahlen in Partikel mit geringem Staubanteil und homogener Partikelgrößenverteilung überführt werden können.

Es wurde nun überraschend gefunden, dass diese Aufgabe durch die nachstehend definierten Polyester gelöst wird.

Die erfindungsgemäßen Polyester zeigen ein deutlich verbessertes Schmutzablösevermögen, insbesondere gegenüber öligen und fettigen Flecken, zeichnen sich durch ein sehr gutes Auflöseverhalten bereits bei Temperaturen von 20°C aus und können gut als rieselfähige, lagerstabile Granulate dargeboten und in feste, rieselfähige Zubereitungen eingearbeitet werden. Die erfindungsgemäßen Polyester haben ein glasartiges bis opaques Aussehen, bevorzugt ein opaques Aussehen und lassen sich in einfacher Weise zu Partikeln mit gewünschter Partikelgrößenverteilung vermahlen. Sehr feine Anteile können in den Herstellprozeß zurückgeführt werden und zeigen keine Zersetzung und Farbänderung.

Gegenstand der Erfindung sind Polyester enthaltend die Struktureinheiten der Formel Ia und Endgruppen der Formel II und der Formel III oder Endgruppen der Formel II und der Formel IV oder Endgruppen der Formel II, III und IV oder enthaltend die Struktureinheiten der Formel la und der Formel Ib und Endgruppen der Formel II und der Formel III oder Endgruppen der Formel II und der Formel IV oder Endgruppen der Formel II, III und IV 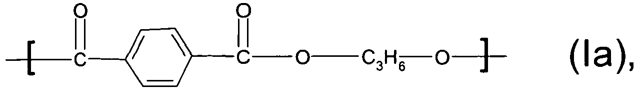 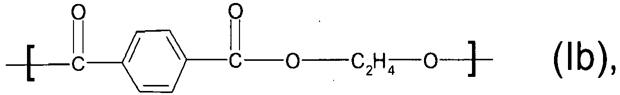 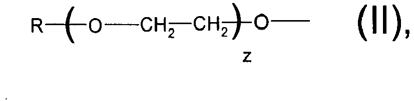 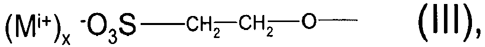 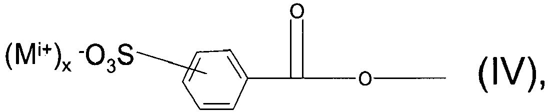
worin R C₁-C₄-Alkyl ist und insbesondere Methyl,
M Wasserstoff oder ein ein- oder zweiwertiges Kation bedeutet,
i 1 oder 2 ist,
x 0,5 oder 1 bedeutet und das Produkt i · x = 1 ist, und
z eine ganze Zahl von 10 bis 35, vorzugsweise von 10 bis 20 und insbesondere von 12 bis 18 bedeutet.

Bevorzugte erfindungsgemäße Polyester enthalten neben den Struktureinheiten der Formel Ia oder der Formeln Ia und Ib und den Endgruppen der Formeln II und III oder der Formeln II und IV oder der Formeln II, III und IV die Struktureinheiten der Formel Va und/oder der Formel VIa oder die Struktureinheiten der Formeln Va und Vb und/oder der Formeln VIa und VIb 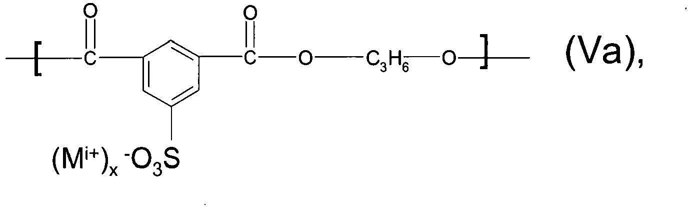 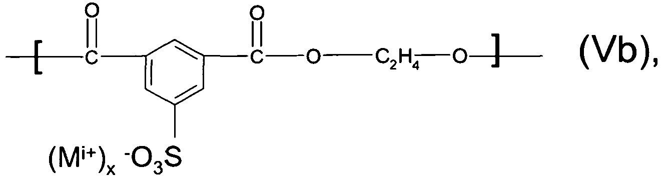 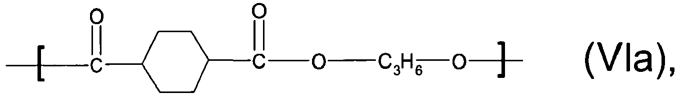 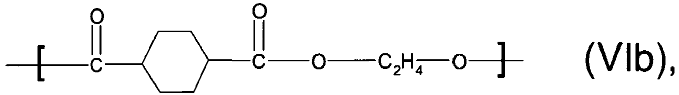
worin M Wasserstoff oder ein ein- oder zweiwertiges Kation bedeutet,
i 1 oder 2 ist,
x 0,5 oder 1 bedeutet und das Produkt i · x = 1 ist.

Die Propylenglykoleinheiten -C₃H₆- können die Struktur -CH₂-CH₂-CH₂- oder vorzugsweise die Struktur -CH(CH₃)-CH₂- aufweisen.

Die erfindungsgemäßen Polyester sind dadurch gekennzeichnet, dass diese Struktureinheiten der Formel Ia oder der Formeln Ia und Ib aufweisen, sowie ausgewählte Kombinationen von Endgruppen.

Die Molekulargewichte der erfindungsgemäßen Polyester liegen im Bereich von 2000 g/mol bis 20 000 g/mol, bevorzugt 2500 g/mol bis 12 000 g/mol, besonders bevorzugt 3000 g/mol bis 8000 g/mol.

Das Erzeugen der gewünschten Molekulargewichte kann durch die Auswahl der Verhältnisse der einzelnen Monomeren zueinander erfolgen. Diese Vorgehensweise ist dem Fachmann bekannt.

Das Gewichtsmittel der Molekulargewichte wird mittels Größenausschlusschromatographie in wässriger Lösung unter Verwendung einer Kalibierung mit Hilfe von eng verteilten Polyacrylsäure-Na-Salz Standards bestimmt.

Besonders bevorzugt sind erfindungsgemäße Polyester, enthaltend >3, bevorzugt >= 6 Terephthalateinheiten der Formel Ia oder zusammengenommen der Formeln Ia und Ib, im Molekül.

Eine bevorzugte Ausführungsform der Erfindung sind Polyester enthaltend die Struktureinheiten der Formel Ia oder der Formeln Ia und Ib und Endgruppen der Formel II, worin R eine Methylgruppe ist und der Index z für eine Zahl von 8 bis 22, bevorzugt für 10 bis 20, besonders bevorzugt für 12 bis 18 steht, sowie Endgruppen der Formel III und/oder der Formel IV.

Eine weitere bevorzugte Ausführungsform der Erfindung sind Polyester enthaltend die Struktureinheiten der Formel Ia oder der Formeln Ia und Ib und Endgruppen der Formel II und Endgruppen der Formel III.

Eine weitere bevorzugte Ausführungsform der Erfindung sind Polyester enthaltend die Struktureinheiten der Formel Ia oder der Formeln Ia und Ib und Endgruppen der Formeln II, III und IV.

In einer weiteren bevorzugten Ausführungsform enthalten die erfindungsgemäßen Polyester Struktureinheiten der Formel la und Endgruppen der Formeln II und IV oder Struktureinheiten der Formeln Ia und Ib und Endgruppen der Formeln II und IV.

In einer weiteren bevorzugten Ausführungsform enthalten die erfindungsgemäßen Polyester Struktureinheiten der Formeln Ia und Va und Endgruppen der Formeln II und III, vorzugsweise aber keine Endgruppe der Formel IV und keine Struktureinheit der Formel VIa, oder Struktureinheiten der Formeln Ia, Ib, Va und Vb und Endgruppen der Formel II und III, vorzugsweise aber keine Endgruppe der Formel IV und keine Struktureinheiten der Formeln VIa und VIb.

Eine besondere bevorzugte Ausführungsform sind Polyester enthaltend die Struktureinheiten der Formel Ia oder der Formeln Ia und Ib und Endgruppen der Formel II und III, wobei diese Endgruppen abgeleitet sind aus der Umsetzung mit Polyethylenglykolmonomethylether und Isethionsäure oder eines_ihrer Salze, wobei das Molverhältnis II zu III von 1 zu 50 bis 50 zu 1, bevorzugt von 1 zu 10 bis 10 zu 1, besonders bevorzugt von 1 zu 5 bis 5 zu1, beträgt.

Eine weitere besonders bevorzugte Ausführungsform der Erfindung sind Copolyester enthaltend Struktureinheiten der Formeln la und Va oder enthaltend Struktureinheiten der Formeln Ia, Ib, Va und Vb.

Besonders bevorzugt liegen die Struktureinheiten der Formeln Ia und Va im molaren Verhältnis I zu V von 1 zu 1 bis 10 zu 1, bevorzugt von 2 zu 1 bis 5 zu 1 vor oder die Struktureinheiten der Formeln la, Ib, Va und Vb liegen im molaren Verhältnis Ia + Ib zu Va + Vb von 1 zu 1 bis 10 zu 1, bevorzugt von 2 zu 1 bis 5 zu 1 vor.

Ganz besonders bevorzugt sind Polyester, bei denen die Gruppe -SO₃M in der Endgruppe der Formel IV in 3-Position steht und M Wasserstoff ist oder ein Alkalimetallkation und/oder ein Erdalkalimetallkation.

Die erfindungsgemäßen Polyester können vernetzt oder vorzugsweise nicht vernetzt sein.

Der molare Anteil an vernetzenden Struktureinheiten, bezogen auf die Gesamtmenge an Struktureinheiten im Polyester beträgt 0 bis 5 Mol, vorzugsweise 0 bis 3 Mol % und ganz besonders bevorzugt 0 bis 1 Mol %.

Unter vernetzenden Struktureinheiten sind im Rahmen dieser Beschreibung Struktureinheiten zu verstehen, die mindestens drei Funktionalitäten, wie Sauerstoff- oder Carbonsäurebrücken aufweisen und die mindestens zwei Polyesterketten miteinander kovalent verbinden.

Vernetzende Struktureinheiten in den erfindungsgemäßen Polyestern können solche der Formel VII sein 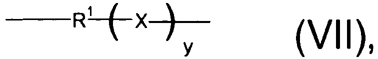 worin
y eine ganze Zahl von 3 bis 6 ist,
R¹ ein drei- bis sechswertiger organischer Rest, vorzugsweise ein drei- bis sechswertiger Alkyl- oder Arylrest ist, und
X -O- und/oder -COO- bedeutet.

Außerordenlich bevorzugt sind nicht vernetzte Polyester.

M ist vorzugsweise Wasserstoff oder ein Alkali- oder Erdalkalimetallkation, insbesondere Wasserstoff oder ein Alkalimetallkation, und ganz besonders bevorzugt Wasserstoff oder ein Natrium- oder Kaliumkation.

Die erfindungsgemäßen Polyester zeichnen sich durch eine vorteilhafte Löslichkeit und Dispergierbarkeit in Wasser aus.

Weitere bevorzugte Polyester sind dadurch gekennzeichnet, dass diese eine Löslichkeit und/oder Dispergierbarkeit in Wasser bei 25°C von > 0,05 g/l, bevorzugt 0,5 g/l bis 500 g/l aufweisen.

Weitere bevorzugte Polyester sind dadurch gekennzeichnet, dass diese als stabile wässrige Dispersionen dargereicht werden können mit einem Gewichtsanteil an den erfindungsgemäßen Polyestern von vorzugsweise 5,0 bis 50,0 Gew. %, besonders bevorzugt 10,0 bis 40,0 Gew. % und insbesondere bevorzugt 15,0 bis 30,0 Gew. %, jeweils bezogen auf das Gesamtgewicht der fertigen wässrigen Dispersion.

In einer besonders bevorzugten Ausführungsform der Erfindung bestehen die wässrigen Dispersionen aus dem einen oder den mehreren erfindungsgemäßen Polyester(n) und Wasser.

In einer weiteren bevorzugten Ausführungsform sind die erfindungsgemäßen Polyester farbig und sind durch Polykondensation von Monomeren zur Ausbildung der oben genannten Struktureinheiten in Gegenwart von einem oder mehreren Pigment(en) hergestellt worden.

Die Herstellung der farbigen Polyester kann in der in EP 2 552 994 A1 beschriebenen Weise erfolgen.

Die Herstellung der erfindungsgemäßen farbigen Polyester kann auch in der Weise erfolgen, daß nach der Kondensation der oben genannten Monomere, ein oder mehrere Pigmente zugegeben und mit dem Kondensationsprodukt vermischt werden.

Die Synthese der erfindungsgemäßen Polyester erfolgt nach an sich bekannten Verfahren, indem die für den Aufbau des gewünschten Polyesters erforderlichen Monomeren und gegebenenfalls ein oder mehrere Pigmente unter Zusatz eines Katalysators, sowie einem Salz einer kurzkettigen Carbonsäure, bevorzugt Acetat, zunächst bei Normaldruck auf Temperaturen von 160 bis ca. 220°C unter Verwendung einer Inert-Atmosphäre vorverestert werden.

Anschließend können die gewünschten Molekulargewichte im Vakuum bei Temperaturen von 160 bis ca. 240°C durch Abdestillieren überstöchiometrischer Mengen der eingesetzten Glykole aufgebaut werden.

Für die Reaktion eignen sich die bekannten Umesterungs- und Kondensationskatalysatoren des Standes der Technik, wie beispielsweise Titantetraisopropylat, Dibutylzinnoxid, Alkali- oder Erdalkalimetallalkoholate oder Antimontrioxid/Calciumacetat.

Bezüglich weiterer Einzelheiten zur Durchführung der Polykondensation wird auf EP 442 101 A1 verwiesen.

Bevorzugt erfolgt die Herstellung der erfindungsgemäßen Polyester durch Umsetzung von
a) Terephthalsäuredimethylester,
b) Propylenglykol oder Ethylenglykol und Propylenglykol,
c) Polyethylenglykolmonomethylether mit einem gewichtsmittleren Molekulargewicht im Bereich von 500 bis 1555 g/mol, bevorzugt von 500 bis 800 g/mol und insbesondere von 550 g/mol oder von 750 g/mol,
d) Isethionsäure oder eines ihrer Salze, insbesondere ihrer Alkali- oder Erdalkalimetallsalze und/oder
e) Sulfobenzoesäure, Salze, insbesondere ihrer Alkali-erdalkalimetallsalze, vorzugsweise 3-Sulfobenzoesäure, Na-Salz
f) gegebenenfalls Sulfoisophthalsäuredimethylester und
g) gegebenenfalls 1,4-Cyclohexandicarbonsäuredimethylester
wobei vorzugsweise neben den Komponenten a), b), c) und d) oder neben den Komponenten a), b), c) und e) oder neben den Komponenten a), b), c), d) und e) mindestens eine der Komponenten f) und/oder g) zusätzlich zur Umsetzung kommen.

Als Propylenglykol wird vorzugsweise 1,2-Propylenglykol verwendet.

Als Polyethylenglykolmonomethylether wird vorzugsweise Polyethylenglykolmonomethylether mit einem gewichtsmittleren Molekulargewicht im Bereich von 500 bis 800 g/mol, bevorzugt 550 g/mol und 750 g/mol verwendet.

Die Struktureinheiten der Formel Ia können durch Umsetzung der oben genannten Komponente a) Terephthalsäuredimethylester mit Komponente b) Propylenglykol erhalten werden; die Struktureinheiten der Formeln Ia und Ib können durch Umsetzung der oben genannten Komponente a) Terephthalsäuredimethylester mit Komponenten b) Propylenglykol und Ethylenglykol erhalten werden.

Die Endgruppen der Formeln II, III und IV können durch Umsetzung mit den oben genannten Komponenten c), d) und e) erhalten werden.

In einer besonderen Ausführungsform der Erfindung werden zur Herstellung der erfindungsgemäßen Polyester die Komponenten c) und d) im Molverhältnis 1 zu 10 bis 10 zu 1, bevorzugt 1 zu 5 bis 5 zu 1 und außerordentlich bevorzugt 1 zu 2 bis 2 zu 1 eingesetzt.

In einer ebenso bevorzugten Ausführungsform der Erfindung werden zur Herstellung der erfindungsgemäßen Polyester die Komponenten c) und e) im Molverhältnis 1 zu 10 bis 10 zu 1, bevorzugt 1 zu 5 bis 5 zu 1 und außerordentlich bevorzugt 1 zu 2 bis 2 zu 1 eingesetzt.

In einer ebenso bevorzugten Ausführungsform der Erfindung werden zur Herstellung der erfindungsgemäßen Polyester die Komponente c) und eine Mischung aus d) und e) im Molverhältnis c) zu (d) + e)) von 1 zu 10 bis 10 zu 1, bevorzugt von 1 zu 5 bis 5 zu 1 und außerordentlich bevorzugt von 1 zu 2 bis 2 zu 1 eingesetzt.

Die Polykondensation kann in Gegenwart oder in Abwesenheit von einer oder mehreren vernetzend wirkenden Verbindungen h) stattfinden. Dazu zählen bevorzugt Vernetzer mit drei bis sechs zur Polykondensation befähigten Funktionen, insbesondere Säure-, Alkohol- oder Esterfunktionen.

Bevorzugt sind Polykondensationsreaktionen, bei denen Monomere a) bis d) und f) in Abwesenheit des Monomeren g) und in Abwesenheit der Komponente h) und i) miteinander umgesetzt werden; oder bei denen Monomere a) bis c), e) und f) in Abwesenheit des Monomeren g) und in Abwesenheit der Komponente h) und i) miteinander umgesetzt werden; oder bei denen Monomere a) bis f) in Abwesenheit des Monomeren g) und in Abwesenheit der Komponente h) und i) miteinander umgesetzt werden.

Weitere bevorzugte Polykondensationsreaktionen betreffen die Umsetzung der Monomeren a) bis d) und f) in folgenden Molverhältnissen, jeweils bezogen auf 1 Mol der Komponente a), Terephthalsäuredimethylester:
Monomer(e) b): 1 bis 25,0 Mol, vorzugsweise 2 bis 22 Mol, besonders bevorzugt 4 bis 21 Mol, insbesondere bevorzugt 5 bis 20 Mol pro Mol a), und
Monomer c): 0,01 bis 1,0 Mol, vorzugsweise 0,02 bis 0,8 Mol, besonders bevorzugt 0,05 bis 0,5, insbesondere bevorzugt 0,1 bis 0,5 Mol pro Mol a), Monomer d): 0,001 bis 0,8 Mol, vorzugsweise 0,005 bis 0,5 Mol, besonders bevorzugt 0,05 bis 0,4 Mol, insbesondere bevorzugt 0,1 bis 0,3 Mol pro Mol a) und
Monomer f): 0,01 bis 3 Mol, vorzugsweise 0,05 bis 2 Mol, besonders bevorzugt 0,1 bis 1,5 Mol pro Mol a),
mit der Maßgabe, dass die molaren Verhältnisse der Monomeren a) bis d) und f) so gewählt werden, dass Polymere mit Molekulargewichten im Bereich von 2000 g/mol bis 20 000 g/mol erhalten werden.

Weitere bevorzugte Polykondensationsreaktionen betreffen die Umsetzung der Monomeren a) bis c), e) und f) in folgenden Molverhältnissen, jeweils bezogen auf 1 Mol der Komponente a), Terephthalsäuredimethylester:
Monomer(e) b): 1 bis 25,0 Mol, vorzugsweise 2 bis 22 Mol, besonders bevorzugt 4 bis 21 Mol, insbesondere bevorzugt 5 bis 20 Mol pro Mol a), und
Monomer c): 0,01 bis 1,0 Mol, vorzugsweise 0,02 bis 0,8 Mol, besonders bevorzugt 0,05 bis 0,5, insbesondere bevorzugt 0,1 bis 0,5 Mol pro Mol a), und
Monomer e): 0,001 bis 0,8 Mol, vorzugsweise 0,01 bis 0,7 Mol, besonders bevorzugt 0,05 bis 0,6 Mol, insbesondere bevorzugt 0,1 bis 0,5 Mol pro Mol a) und
Monomer f): 0,01 bis 3 Mol, vorzugsweise 0,05 bis 2 Mol, besonders bevorzugt 0,1 bis 1,5 Mol pro Mol a),
mit der Maßgabe, dass die molaren Verhältnisse der Monomeren a) bis c), e) und f) so gewählt werden, dass Polymere mit Molekulargewichten im Bereich von 2000 bis 20 000 g/mol erhalten werden.

Weitere bevorzugte Polykondensationsreaktionen betreffen die Umsetzung der Monomeren a) bis f) in folgenden Molverhältnissen, jeweils bezogen auf 1 Mol der Komponente a), Terephthalsäuredimethylester:
Monomer(e) b): 1 bis 25,0 Mol, vorzugsweise 2 bis 22 Mol, besonders bevorzugt 4 bis 21 Mol, insbesondere bevorzugt 5 bis 20 Mol pro Mol a), und
Monomer c): 0,01 bis 1,0 Mol, vorzugsweise 0,02 bis 0,8 Mol, besonders bevorzugt 0,05 bis 0,5, insbesondere bevorzugt 0,1 bis 0,5 Mol pro Mol a), und
Monomer d): 0,001 bis 0,8 Mol, vorzugsweise 0,01 bis 0,7 Mol, besonders bevorzugt 0,05 bis 0,6 Mol, insbesondere bevorzugt 0,1 bis 0,5 Mol pro Mol a) und
Monomer e): 0,001 bis 0,8 Mol, vorzugsweise 0,01 bis 0,7 Mol, besonders bevorzugt 0,05 bis 0,6 Mol, insbesondere bevorzugt 0,1 bis 0,5 Mol pro Mol a) und
Monomer f): 0,01 bis 3 Mol, vorzugsweise 0,05 bis 2 Mol, besonders bevorzugt 0,1 bis 1,5 Mol pro Mol a),
mit der Maßgabe, dass die molaren Verhältnisse der Monomeren a) bis f) so gewählt werden, dass Polymere mit Molekulargewichten im Bereich von 2000 bis 20 000 g/mol erhalten werden.

Sind bei der Polykondensation Vernetzer i) zugegegen, so werden diese bevorzugt in Mengen von 0,00001 bis 0,1 Mol, insbesondere von 0,00002 bis 0,01 Mol, und ganz besonders bevorzugt von 0,00005 bis 0,0001 Mol pro Mol a) eingesetzt.

Die erfindungsgemäßen Polyester können in unterschiedlichen Darreichungsformen zum Einsatz gelangen. Beispiele dafür sind Granulate, Tabletten, Gele, wässrige Dispersionen oder wässrige Lösungen.

Gegenstand der Erfindung ist außerdem die Verwendung der erfindungsgemäßen Polyester in Wasch- und Reinigungsmitteln, Textilpflegemitteln und Mitteln zur Ausrüstung von Textilien.

Die erfindungsgemäßen Polyester verleihen den Textilfasern signifikant verbesserte schmutzablösende Eigenschaften und unterstützen das Schmutzablösevermögen der übrigen Waschmittelbestandteile gegenüber öligen, fettigen oder Pigmentanschmutzungen wesentlich.

Weiter von Vorteil kann die Verwendung der erfindungsgemäßen Polyester in Nachbehandlungsmitteln für die Wäsche, beispielsweise in einem Weichspülmittel sein.

Mit Hilfe der erfindungsgemäßen Polyester in Reinigungsmitteln für Oberflächen, insbesondere für harte Oberflächen, lassen sich die behandelten Oberflächen schmutzabstoßend ausrüsten.

Die Erfindung betrifft auch die Verwendung der oben beschriebenen Polyester als Soil-Release Polymere.

Die Wasch-, Pflege- und Reinigungsmittelformulierungen, in denen die erfindungsgemäßen Polyester eingesetzt werden können, können pulver-, granulat-, tablettenförmig, pasten-, gelförmig oder flüssig sein.

Beispiele hierfür sind Vollwaschmittel, Feinwaschmittel, Colorwaschmittel, Wollwaschmittel, Gardinenwaschmittel, Baukastenwaschmittel, Waschtabletten, bar soaps, Fleckensalze, Wäschestärken und -steifen und Bügelhilfen.

Die erfindungsgemäßen Polyester können auch in Haushaltsreinigungsmitteln, beispielsweise in Allzweckreinigern, oder in Geschirrspülmitteln, in Teppichreinigungs- und Imprägniermitteln, in Reinigungs- und Pflegemitteln für Böden und andere harte Oberflächen, z.B. aus Kunststoff, Keramik, Glas oder mit Nanotechnologie beschichtete Oberflächen eingearbeitet werden.

Beispiele für technische Reinigungsmittel sind Kunststoffreinigungs- und Pflegemittel, etwa für Gehäuse und Autoarmaturen, sowie Reinigungs- und Pflegemittel für lackierte Oberflächen wie etwa Autokarosserien.

Die erfindungsgemäß ausgerüsteten Wasch- Pflege- und Reinigungsmittel enthalten im Allgemeinen mindestens 0,1 Gew.-%, bevorzugt zwischen 0,1 und 10 Gew.-% und besonders bevorzugt 0,2 bis 3 % Gew.-% der erfindungsgemäßen Polyester, bezogen auf die fertigen Mittel.

Die Formulierungen sind je nach der vorgesehenen Anwendung in ihrer Zusammensetzung der Art der zu behandelnden oder zu waschenden Textilien oder der zu reinigenden Oberflächen anzupassen.

Die erfindungsgemäß ausgerüsteten Wasch-, Pflege- und Reinigungsmittel können gängige Inhaltsstoffe, wie Tenside, Emulgatoren, Gerüststoffe, Bleichkatalysatoren und Bleichaktivatoren, Sequestriermittel, Vergrauungsinhibitoren, Farbübertragungsinhibitoren, Farbfixiermittel, Enzyme, optische Aufheller, weich machende Komponente enthalten. Außerdem können Formulierungen oder Teile der Formulierung im Sinne der Erfindung durch Farbstoffe und/oder Duftstoffe gezielt eingefärbt und/oder parfümiert werden.

Die nachfolgenden Beispiele sollen die Erfindung erläutern ohne sie darauf einzuschränken. Alle Prozentangaben sind, sofern nicht explizit anders angegeben, als Gewichtsprozent (Gew.-%) zu verstehen.

### Beispiel 1 (erfindungsgemäßer Polyester)

In einem 2-Liter Vierhalskolben mit KPG-Rührer, Innenthermometer, Gaseinleitungsrohr und Destillierbrücke wurden nacheinander 194,1 g (1,00 mol) Terephthalsäuredimethylester, 88,8 g (0,3 mol) 5-Sulfoisophthalsäuredimethylester-Natriumsalz, 235,4 g (3,8 mol) Ethylenglykol und 144,4 g (1,9 mol) 1,2-Propylenglykol vorgelegt. Anschließend wurden zur Reaktionsmischung 8,88 g (0,06 mol) Isethionsäure-Natriumsalz und 45g Polyyethylenglykolmonomethylether 750 (0,06 mol) hinzugegeben.

Anschließend wurde das Reaktionsgemisch durch Einleitung von Stickstoff inertisiert. Im Gegenstrom wurden darauffolgend 2 g Titantetraisopropylat und 1 g Natriumacetat zur Reaktionsmischung hinzugegeben. Das Gemisch wurde auf etwa 165°C erhitzt und eine Stunde auf Temperatur gehalten. Bei dieser Temperatur begann die Umesterung und das entstehende Methanol wurde abdestilliert.

Zwei Stunden nach Beginn der Destillation wurde die Temperatur innerhalb von 1 h auf 210°C erhöht. Nach beendeter Reaktionszeit wurde auf unter 195°C abgekühlt und innerhalb von 30 Minuten der Druck auf 10 mbar reduziert. Während der sich anschließenden zweistündigen Vakuumdestillation wurde die Kondensation durch Abdestillation der überschüssigen Alkoholmenge vervollständigt. Für weitere 30 Minuten wurde das Vakkuum auf 1 mbar reduziert, anschließend mit Stickstoff belüftet und die Schmelze auf geeignete Bleche ausgetragen.

### Beispiel 2 (erfindungsgemäßer Polyester)

In einem 2-Liter Vierhalskolben mit KPG-Rührer, Innenthermometer, Gaseinleitungsrohr und Destillierbrücke wurden nacheinander 555,48 g (3,75 mol) Terephthalsäuredimethylester, 125,09 g (0,5 mol) 5-Sulfoisophthalsäuredimethylester-Natriumsalz und 1162 g (20 mol) 1,2-Propylenglykol vorgelegt. Anschließend wurden zur Reaktionsmischung 215,37 g (1,00 mol) 3-Sulfobenzoesäure-Natriumsalz hinzugegeben Zum Schluss wurden dem Reaktionsgemisch 110 g Polyethylenglykolmonomethylether 550 zugegeben.

Anschließend wurde das Reaktionsgemisch durch Einleitung von Stickstoff inertisiert. Im Gegenstrom wurden darauffolgend 2 g Titantetraisopropylat und 1 g Natriumacetat zur Reaktionsmischung hinzugegeben. Das Gemisch wurde auf etwa 165°C erhitzt und eine Stunde auf Temperatur gehalten. Bei dieser Temperatur begann die Umesterung und das entstehende Methanol wurde abdestilliert.

Eine Stunde nach Beginn der Destillation wurde die Temperatur innerhalb von 2 h auf 210°C erhöht. Nach beendeter Reaktionszeit wurde auf unter 195°C abgekühlt und innerhalb von 1 Stunde der Druck auf 5 mbar reduziert. Während der zweistündigen Vakuumdestillation wurde die Kondensation durch Abdestillation der überschüssigen Alkoholmenge vervollständigt. Für weitere 20 Minuten wurde das Vakkuum auf 5 mbar reduziert, anschließend mit Stickstoff belüftet und die Schmelze auf geeignete Bleche ausgetragen.

### Beispiel 3 (erfindungsgemäßer Polyester)

In einem 1-Liter Vierhalskolben mit KPG-Rührer, Innenthermometer, Vigreux-Kolonne, Destillationsbrücke, N₂-Überleitung (5 Liter/Stunde) und Anschütz-Thiele-Vorstoß wurden 72,8 g (0,375 mol) Terephthalsäuredimethylester, 37,03 g (0,125 mol) 5-Sulfoisophthalsäuredimethylester-Natriumsalz, 62,07 g (1 mol) Ethylenglykol, 76,09 g (1 mol) 1,2-Propandiol, 37,13 g (0,0675 mol) Polyethylenglykolmonomethylether (Molmasse 550 g/mol), 10 g (0,0675 mol) 2-Hydroxyethansulfonsäure-Natriumsalz und 0,45 g (0,0056 mol) wasserfreies Natriumacetat vorgelegt und das Reaktionsgemisch anschließend unter N₂-Überlagerung (5 Liter/Stunde) auf 60 °C Innentemperatur unter Rühren bei einer Rührgeschwindigkeit von 50-100 Umdrehungen/Minute hochgeheizt. Nach Schließung der N₂- Überlagerung wurden 0,75 g (0,0027 mol) Titantetraisopropylat zugegeben. Anschließend wurde die Rührgeschwindigkeit auf 300 Umdrehungen/ Minute erhöht und der Ansatz innerhalb von 2 Stunden auf eine Innentemperatur von 150 °C und in weiteren 2 Stunden auf eine Innentemperatur von 200 °C hochgeheizt. Ab einer Innentemperatur von 170 °C wurde die N₂-Überlagerung wieder geöffnet. Das Reaktionsgemisch wurde 2 Stunden bei 200 °C erhitzt und entstehendes Methanol abdestilliert, das in einer mit Eis gekühlten Vorlage kondensiert wurde.

Nach Beendigung des Methanolablaufs wurde das Vakuum schrittweise auf 5 mbar abgesenkt und dabei überschüssiges Glykol abdestilliert. Die Innentemperatur wurde auf maximal 220°C erhöht. Nach Beendigung des Glykolablaufs wurden weitere 2 Stunden bei 5 mbar nachkondensiert. Anschließend wurde mit N₂ belüftet und die Schmelze auf Bleche ausgetragen.

### Beispiele 4 bis 10 (erfindungsgemäße Polyester) und Vergleichsbeispiele V-1 bis V-4

Man verfuhr wie bei der Herstellung des Polyesters in Beispiel 1 angegeben und setzte die in den nachstehenden Tabellen aufgeführten Komponenten miteinander um.

In allen Fällen wurde mit 5g Titantetraisopropylat als Umesterungskatalysator und mit 3g Natriumacetat gearbeitet.

**Tabelle la der Inhaltsstoffe (in g Angaben) der Polyester der Beispiele 4 bis 10 und der Vergleichsbeispiele V-1 bis V-4**

| Polyester Nr. | 5-SIM^{*)} (g) | DMT^{*)} (g) | EG^{*)} (g) | PG^{*)} (g) | 3-SBS^{*)} (g) | Isethion säure^{*)} (g) | MPEG^{*)} (g) | MPEG Typ (g/mol) |
|---|---|---|---|---|---|---|---|---|
| 4 | 123 | 242 | 206 | 253 | 22,37 | 20,72 | 55 | 550 |
| 5 | 370 | 728 | 496 | 760 | 302 | - | 150 | 750 |
| 6 | 370 | 728 | 620 | 608 | 156,6 | - | 112,5 | 750 |
| 7 | 370 | 728 | 496 | 760 | - | 15 | 275 | 550 |
| 8 | 0 | 1044 | 620 | 760 | 111,8 | 8,88 | 33 | 550 |
| 9 | 148 | 728 | 806 | 380 | - | 4,44 | 300 | 750 |
| 10 | 148 | 728 | 62 | 144 4 | - | 1,48 | 375 | 750 |
| V-1 | 148 | 728 | 1224 | 0 | - | 74 | 375 | 750 |
| V-2 | 148 | 728 | 310 | 760 | - | 37 | 200 | 2000 |
| V-3 | 88,8 | 194,1 | 235 | 144, 8 | - | 17,76 | - | |
| V-4 | 266,2 | 97,0 | 322,4 | - | 33,35 | - | 0,1 | 2000 |

**Tabelle Ib der Inhaltsstoffe (in mol Angaben) der Polyester der Beispiele 4 bis 10 und der Vergleichsbeispiele V-1 bis V-4**

| Polyester Nr. | 5-SIM^{*)} (mol) | DMT^{*)} (mol) | EG^{*)} (mol) | PG^{*)} (mol) | 3-SBS^{*)} (mol) | Isethionsäure^{*} (mol) | MPEG^{*} (mol) | MPEG Typ (g/mol) |
|---|---|---|---|---|---|---|---|---|
| 4 | 0,42 | 0,82 | 3,3 | 3,3 | 0,10 | 0,14 | 0,1 | 550 |
| 5 | 1,25 | 2,46 | 8 | 10 | 1,35 | - | 0,2 | 750 |
| 6 | 1,25 | 2,46 | 10 | 8 | 0,70 | - | 0,15 | 750 |
| 7 | 1,25 | 2,46 | 8 | 10 | - | 0,10 | 0,5 | 550 |
| 8 | 0 | 3,53 | 10 | 10 | 0,50 | 0,06 | 0,06 | 550 |
| 9 | 0,5 | 2,46 | 13 | 5 | - | 0,3 | 0,4 | 750 |
| 10 | 0,5 | 2,46 | 1 | 19 | - | 0,01 | 0,5 | 750 |
| V-1 | 0,5 | 2,46 | 20 | - | - | 0,5 | 0,5 | 750 |
| V-2 | 0,5 | 2,46 | 5 | 10 | - | 0,25 | 0,1 | 2000 |
| V-3 | 0,3 | 1,00 | 3,8 | 1,9 | - | 0,12 | - | - |
| V-4 | 0,9 | 0,5 | 5,2 | - | 0,15 | - | 0,1 | 2000 |

| | | | | | | | | |
|---|---|---|---|---|---|---|---|---|
| 5-SIM = 5-Sulfoisophthalsäuredimethylester-Natriumsalz DMT = Dimethylterephthalat EG = Ethylenglykol PG = 1,2-Propylenglykol 3-SBS = 3-Sulfobenzoylsäure-Natriumsalz Isethionsäure = 2-Hydroxyethansulfonsäure-Natrium-Salz MPEG = Polyethylenglykolmonomethylether | | | | | | | | |

Die erfindungsgemäßen Polyester besitzen eine leicht opaleszente, glasartige Konsistenz und zeigen eine gute Löslichkeit in demineralisiertem Wasser.

Die erfindungsgemäßen Polyester waren von fester Konsistenz und konnten in einfacher Weise zu Pulver vermahlen werden, insbesondere mit der Siebmühle zu Partikelgrößen mit enger Partikelgrößenverteilung und geringem Staubanteil.

Feinanteile, die durch den Mahlprozess anfallen, können dem Herstellprozess zugeführt und weiter umgesetzt werden.

Die erfindungsgemäßen Polyester zeigten keine Tendenz zur Hygroskopizität und neigten auch nach Lagerung über viele Wochen nicht zur Klebrigkeit.

Nicht erfindungsgemäßen Polyester gemäß V-1 (enthaltend keine Propylenglykolstrukturelemente) und V-2 (enthaltend nichtionische Endgruppen, abgeleitet von Polyethylenglykolmonomethylether mit hohem Anteil an Ethylenglykolstruktureinheiten) waren von klebriger Konsistenz und nicht vermahlbar.

Nicht erfindungsgemäße Polyester gemäß V-3 (enthaltend keine nichtionischen Endgruppen, sondern nur anionische Endgruppen, abgeleitet von der Isethionsäure) hatten sehr hohe Schmelzviskositäten mit > 1 Mio mPas und konnten nicht vom Reaktor auf Bleche ausgetragen werden.

Der nicht erfindungsgemäße Polyster gemäß V-4, enthaltend die anionische Endgruppe, abgeleitet von der 3-Sulfobenzoesäure, und die nichtionische Endgruppe, abgeleitet von Methylpolyethylenglycol MPEG 2000, ist von klebriger Konsistenz und zeigt ein unbefriedigendes Waschergebnis.

Die erfindungsgemäßen Polyester enthaltend nichtionische und anionische Endgruppen zeichnen sich durch eine sehr gute vergrauungsinhibierende Wirkung aus (Soil Release Wirkung).

**Tabelle II: Waschergebnisse mit den erfindungsgemäßen Polyester im Vergleich zu Soil Release Polyestern des Standes der Technik in dem Waschpulver Spee Aktiv Pulver (UBA 0416 8282), Dirty Motor Oil (DMO) Test an dem Testgewebe WFK 30A PES bei 20°C Waschtemperatur**

| Spee Aktiv Pulver (UBA 0416 8282) ohne Zusatz | | Remission (%) |
|---|---|---|
| | | 18,1 |
| + 1 % Soil Release Polymer: | | |
| | ®TexCare SRA 300 F | 24,1 |
| | Erfindungsgemäßer Polyester, Beispiel 1 | 25,2 |
| | Vergleichsbeispiel V-4 | 20,4 |

**Tabelle III: Waschbedingungen**

| Waschmaschine: | Linitest, 1x vorausgerüstet |
|---|---|
| Wasserhärte: | 15° dH |
| Ca:Mg | 3 : 2 |
| Läppchen WFK 30A PES, 25 µl Motorenaltöl pro Läppchen | 4 |
| Flottenverhältnis | 1 : 40 |
| Waschtemperatur: | 20° C |
| Waschzeit: | 30 Min. |
| Waschmittelkonzentration: | 4,6 g/l |

Die erfindungsgemäßen Polyester wurden auf ihren Soil Release Effekt hin mit Soil Release Polymeren des Standes der Technik verglichen.

Dazu wurden die Polyester in Konzentrationen von 1 % (Wirkstoff), bezogen auf die Waschmittelformulierung Spee Aktiv Pulver (UBA 0416 8282), der Waschlauge zugesetzt und die Testgewebe WFK 30A PES (Wäschereiforschungsanstalt Krefeld) damit vorgewaschen. Die so vorbehandelten Gewebe wurden getrocknet und mit Motorenaltöl angeschmutzt (mit 25µl pro Testlappen). Nach einer Einwirkzeit von 1 Stunde wurden die Testlappen ohne Zusatz der erfindungsgemäßen Polyester oder von Soil Release Polymeren des Standes der Technik gewaschen. Anschließend wurde die Remission der Testgewebe gemessen.

### Formulierungsbeispiele

Die erfindungsgemäßen Polyester können in feste Wasch- und Reinigungsmittel und in Wasch- und Reinigungsmittel in Mehrkammersystemen zum Reinigen von Textilien, sowie für Oberflächenreinigungsmittel eingesetzt werden.

### Beispiele dafür sind:

**Waschpulver, phosphatfrei mit Bleichmittel**

| | |
|---|---|
| Alkylbenzolsulfonat, Na-Salz | 8,8 % |
| C₁₂-C₁₈-Alkoholethoxylat mit 7 EO | 4,7 % |
| Seife | 3,2 % |
| Schauminhibitor DC2-4248S, Dow Corning | 3,9 % |
| Zeolith 4A | ad 100 % |
| Soda | 11,6 % |
| Polyester, Beispiel 1 | 2,0 % |
| Polycarboxylat (Sokalan® CP5) | 2,4 % |
| Natriumsilikat | 3,0 % |
| Carboxymethylcellulose | 1,2 % |
| Phosphonat (Dequest 2066) | 2,8 % |
| Optischer Aufheller | 0,2 % |
| Natriumsulfat | 6,5 % |
| Protease Savinase 8.0, Novo Nordisk | 0,4 % |
| TAED | 5,0 % |
| Natriumpercarbonat | 18,0 %. |

**Waschpulver, phosphathaltig ohne Bleichmittel**

| | |
|---|---|
| Alkylbenzolsulfonat, Na-Salz | 8,0 % |
| C₁₂-C₁₈-Alkoholethoxylat mit 14 EO | 2,9 % |
| Seife | 3,5 % |
| Natriumtripolyphosphat | 43,8 % |
| Natriumsilikat | 7,5 % |
| Magnesiumsilikat | 1,9 % |
| Polyester, Beispiel 3 | 2,0 % |
| Carboxymethylcellulose | 1,2 % |
| EDTA | 0,2 % |
| Optischer Aufheller | 0,2 % |
| Natriumsulfat | ad 100 % |
| Wasser | 9,8 %. |

**Colorwaschpulver, phosphatfrei ohne Bleichmittel**

| | |
|---|---|
| Alkylbenzolsulfonat, Na-Salz | 11,5 % |
| C₁₂-C₁₀-Alkoholethoxylat mit 7 EO | 6,0 % |
| Seife | 4,5 % |
| Schauminhibitor DC2-4248S, Dow Corning | 5,0 % |
| Polyester, Beispiel 6 | 2,0 % |
| Zeolith 4A | ad 100 % |
| Soda | 15,0% |
| Polycarboxylat (Sokalan® CP5) | 3,0 % |
| Natriumsilikat | 4,0 % |
| Carboxymethylcellulose | 1,6 % |
| Phosphonat (Dequest 2066) | 2,08 % |
| Protease | 0,5 % |
| Polyvinylpyrrolidon | 0,5 % |
| Natriumsulfat | 9,4 %. |

## Patentansprüche

1. Polyester enthaltend die Struktureinheiten der Formel Ia und Endgruppen der Formel II und der Formel III oder Endgruppen der Formel II und der Formel IV oder Endgruppen der Formel II, III und IV oder enthaltend die Struktureinheiten der Formel Ia und der Formel Ib und Endgruppen der Formel II und der Formel III oder Endgruppen der Formel II und der Formel IV oder Endgruppen der Formel II, III und IV 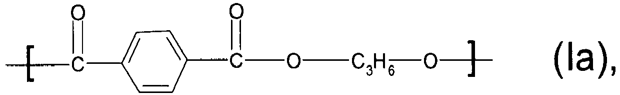 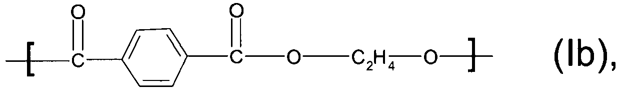 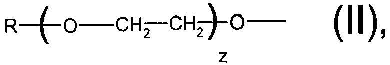 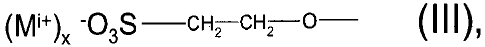 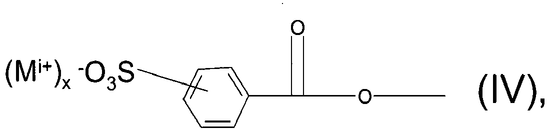
worin R C₁-C₄-Alkyl ist,
M Wasserstoff oder ein ein- oder zweiwertiges Kation bedeutet,
i 1 oder 2 ist,
x 0,5 oder 1 bedeutet und das Produkt i · x = 1 ist, und
z eine ganze Zahl von 10 bis 35 bedeutet.

2. Polyester nach Anspruch 1, **dadurch gekennzeichnet, dass** diese neben den Struktureinheiten der Formel Ia oder der Formeln Ia und Ib und den Endgruppen der Formeln II und III oder der Formeln II und IV oder der Formeln II, III und IV die Struktureinheiten der Formel Va und/oder der Formel VIa oder die Struktureinheiten der Formeln Va und Vb und/oder der Formeln VIa und VIb enthalten 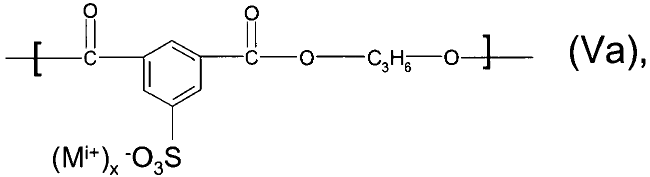 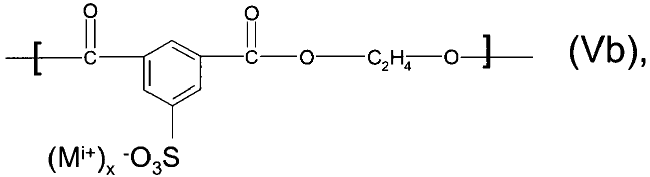 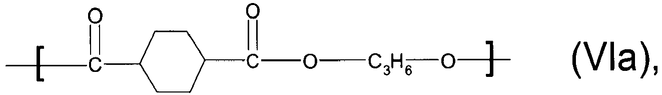 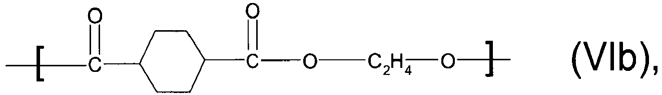
worin M Wasserstoff oder ein ein- oder zweiwertiges Kation bedeutet,
i 1 oder 2 ist,
x 0,5 oder 1 bedeutet und das Produkt i · x = 1 ist.

3. Polyester nach mindestens einem der Ansprüche 1 oder 2, **dadurch gekennzeichnet, dass** diese ein Gewichtsmittel des Molekulargewichts von 2.000 bis 20.000 g/mol, bestimmt mittels Größenausschlusschromatographie, aufweisen.

4. Polyester nach mindestens einem der Ansprüche 1 bis 3, **dadurch gekennzeichnet, dass** diese >4 Einheiten der Formel Ia oder zusam-mengenommen der Formeln Ia und Ib, ganz besonders mit >=6 Einheiten der Formel Ia oder zusammengenommen der Formeln Ia und Ib, im Molekül enthalten.

5. Polyester nach mindestens einem der Ansprüche 1 bis 4, **dadurch gekennzeichnet, dass** diese die Struktureinheiten der Formel Ia oder der Formeln Ia und Ib und Endgruppen der Formel II enthalten, worin R eine Methylgruppe ist und der Index z für eine Zahl von 10 bis 35, bevorzugt für 10 bis 20, besonders bevorzugt für 12 bis 18 steht.

6. Polyester nach mindestens einem der Ansprüche 1 bis 5, **dadurch gekennzeichnet, dass** diese die Struktureinheiten der Formel Ia oder der Formeln Ia und Ib und Endgruppen der Formel II und Endgruppen der Formel III enthalten.

7. Polyester nach mindestens einem der Ansprüche 1 bis 6, **dadurch gekennzeichnet, dass** diese die Struktureinheiten der Formel Ia oder der Formeln Ia und Ib und Endgruppen der Formeln II, III und IV enthalten.

8. Polyester nach mindestens einem der Ansprüche 1 bis 7, **dadurch gekennzeichnet, dass** diese die Struktureinheiten der Formel Ia oder der Formeln la und Ib und Endgruppen der Formel II und III enthalten, wobei diese Endgruppen abgeleitet sind aus der Umsetzung mit Polyethylenglykolmonomethylether und Isethionsäure oder eines ihrer Salze im Molverhältnis II zu III von 1 zu 50 bis 50 zu 1, bevorzugt von 1 zu 10 bis 10 zu 1, besonders bevorzugt von 1 zu 5 bis 5 zu1.

9. Polyester nach mindestens einem der Ansprüche 2 bis 8, **dadurch gekennzeichnet, dass** diese die Struktureinheiten der Formeln la und Va oder die Struktureinheiten der Formeln la, Ib, Va und Vb enthalten.

10. Polyester nach mindestens einem der Ansprüche 2 bis 9, **dadurch gekennzeichnet, dass** die Struktureinheiten der Formeln Ia und Va im molaren Verhältnis I zu V von 1 zu 1 bis 10 zu 1, bevorzugt von 2 zu 1 bis 5 zu 1 vorliegen oder dass die Struktureinheiten der Formeln Ia, Ib, Va und Vb im molaren Verhältnis Ia + Ib zu Va + Vb von 1 zu 1 bis 10 zu 1, bevorzugt von 2 zu 1 bis 5 zu 1 vorliegen.

11. Polyester nach mindestens einem der Ansprüche 1 bis 10, **dadurch gekennzeichnet, dass** die Gruppe -SI₃⁻(Mⁱ⁺)ₓ in der Endgruppe der Formel IV in 3-Position steht und M Wasserstoff ist oder ein Alkalimetallkation, i = 1 ist und x = 1 ist.

12. Polyester nach mindestens einem der Ansprüche 1 bis 11, **dadurch gekennzeichnet, dass** diese Endgruppen der Formel II enthalten, worin R eine Methylgruppe ist und der Index z für eine Zahl von 10 bis 20 und bevorzugt für 12 bis 18 steht.

13. Polyester nach mindestens einem der Ansprüche 1 bis 12, **dadurch gekennzeichnet, dass** diese unvernetzt sind.

14. Polyester nach mindestens einem der Ansprüche 2 bis 13, **dadurch gekennzeichnet, dass** diese Struktureinheiten der Formeln Ia und Va und Endgruppen der Formeln II und III, vorzugsweise aber keine Endgruppe der Formel IV und keine Struktureinheit der Formel VIa, oder Struktureinheiten der Formeln Ia, Ib, Va und Vb und Endgruppen der Formel II und III, vorzugsweise aber keine Endgruppe der Formel IV und keine Struktureinheiten der Formeln VIa und Vlb enthalten.

15. Verfahren zur Herstellung der Polyester nach mindestens einem der Ansprüche 1 bis 13, **dadurch gekennzeichnet, dass**
a) Terephthalsäuredimethylester,
b) Propylenglykol oder Ethylenglykol und Propylenglykol,
c) Polyethylenglykolmonomethylether mit einem gewichtsmittleren Molekulargewicht im Bereich von von 500 bis 1555 g/mol, bevorzugt von 500 bis 800 g/mol und insbesondere von 550 g/mol oder von 750 g/mol, bestimmt mittels Größenausschlusschromatographie,
d) Isethionsäure oder eines ihrer Salze, insbesondere ihrer Alkali-, Erdalkalimetallsalze und/oder
e) Sulfobenzoesäure, Salze, insbesondere ihrer Alkali-, Eralkalimetallsalze, vorzugsweise 3-Sulfobenzoesäure, Na-Salz
f) gegebenenfalls Sulfoisophthalsäuredimethylester und
g) gegebenenfalls 1,4-Cyclohexandicarbonsäuredimethylester miteinander umgesetzt werden, wobei vorzugsweise neben den Komponenten a), b), c) und d) oder neben den Komponenten a), b), c) und e) oder neben den Komponenten a), b), c), d) und e) mindestens eine der Komponenten f) und/oder g) zusätzlich zur Umsetzung kommen.

16. Verfahren nach Anspruch 15, **dadurch gekennzeichnet, dass** das Gemisch der Monomeren a) und b) und der Komponenten c) und d) und/oder e) noch mindestens eines der Monomeren
Sulfoisophthalsäuredimethylester, vorzugsweise 5-Sulfoisophthalsäuredimethylester, und/oder
1,4-Cyclohexandicarbonsäure oder eines ihrer Salze, insbesondere ihrer Alkali-, oder Erdalkalimetallsalze, und/oder
Vernetzer enthält.

17. Verwendung der Polyester nach mindestens einem der Ansprüche 1 bis 14 in Wasch- und Reinigungsmitteln, Textilpflegemitteln und Mitteln zur Ausrüstung von Textilien.

18. Verwendung der Polyester nach mindestens einem der Ansprüche 1 bis 14 als Soil-Release Polymere.

## Claims

1. Polyester comprising structural units of formula Ia and end groups of formulae II and III or end groups of formulae II and IV or end groups of formulae II, III and IV or comprising structural units of formulae Ia and Ib and end groups of formulae II and III or end groups of formulae II and IV or end groups of formulae II, III and IV 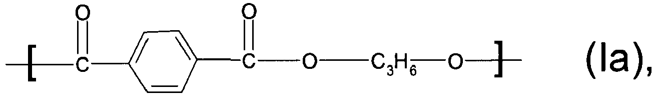 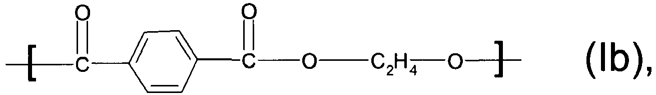 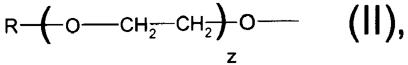
(Mⁱ⁺)ₓ⁻O₃S-CH₂CH₂O- (III), 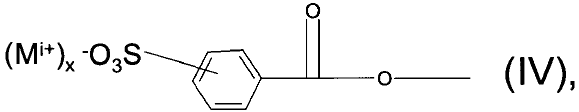
wherein R is C₁-C₄-alkyl,
M is hydrogen or a mono- or divalent cation,
i is 1 or 2 ist,
x is 0.5 or 1 and the product i · x is equal to 1, and
z is an integer from 10 to 35.

2. The polyester according to claim 1, wherein this contains besides structural units of formula Ia or of formulae Ia and Ib and end groups of formulae II and III or of formulae II and IV or of formulae II, III and IV the structural units of formula Va and/or formula VIa or the structural units of formulae Va and Vb and/or of formulae VIa and VIb 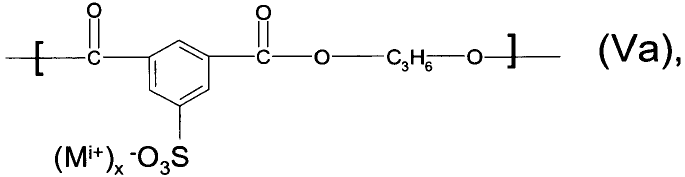 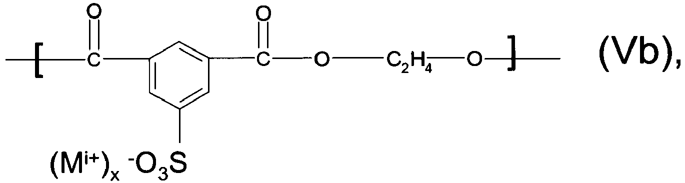 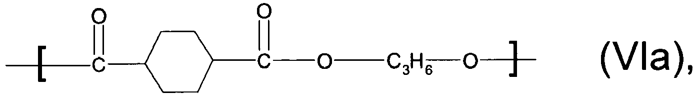 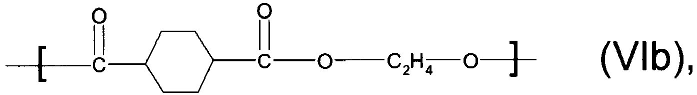
wherein M is hydrogen or a mono- or divalent cation,
i is 1 or 2 ist,
x is 0.5 or 1 and the product i · x is equal to 1.

3. The polyester according to at least one of claims 1 or 2, wherein this has a weight average of molecular weight from 2.000 to 20.000 g/mol, determined by size exclusion chromatography.

4. The polyester according to at least one of claims 1 to 3, wherein this contains in the molecule >4 units of formula Ia or of combined formulae Ia and Ib, preferred >=6 units of formula Ia or of combined formulae Ia and Ib.

5. The polyester according to at least one of claims 1 or 4, wherein this contains the structural units of formula Ia or of formulae Ia and Ib and end groups of formula II, wherein R is a methyl group and index z is a number from 10 to 35, preferably from 10 to 20, and very preferred from 12 to 18.

6. The polyester according to at least one of claims 1 to 5, wherein this contains the structural units of formula Ia or of formulae Ia and Ib and end groups of formula II and end groups of formula III.

7. The polyester according to at least one of claims 1 to 6, wherein this contains the structural units of formula la or of formulae Ia and Ib and end groups of formulae II, III and IV.

8. The polyester according to at least one of claims 1 to 7, wherein this contains the structural units of formula Ia or of formulae la and Ib and end groups of formulae II and III, wherein these end groups are derived from the reaction with polyethylene glycol monomethyl ether and isethionic acid or of one of its salts in the molar ratio II to III from 1 to 50 to 50 to 1, preferably from 1 to 10 to 10 to 1, very preferred from 1 to 5 to 5 to 1.

9. The polyester according to at least one of claims 2 to 8, wherein this contains the structural units of formulae Ia and Va or the structural units of formulae la, Ib, Va and Vb.

10. The polyester according to at least one of claims 2 to 9, wherein the structural units of formulae la and Va are present in the molar ratio I to V from 1 to 1 to 10 to 1, preferably from 2 to 1 to 5 to 1 or wherein the structural units of formulae la, Ib, Va and Vb are present in the molar ratio la + Ib to Va + Vb from 1 to 1 to 10 to 1, preferably from 2 to 1 to 5 to 1.

11. The polyester according to at least one of claims 1 to 10, wherein group -SO₃⁻ (Mⁱ⁺)ₓ in the end group of formula IV is in 3-position and M is hydrogen or an alkali metal cation, i is 1 and x is 1.

12. The polyester according to at least one of claims 1 to 11, wherein this contains end groups of formula II, wherein R is a methyl group and index z is a number from 10 to 20 and preferably from 12 to 18.

13. The polyester according to at least one of claims 1 to 12, wherein this is not crosslinked.

14. The polyester according to at least one of claims 2 to 13, wherein this contains structural units of formulae Ia and Va and end groups of formulae II and III, but preferably no end group of formula IV and no structural unit of formula VIa, or this contains structural units of formulae Ia, Ib, Va and Vb and end groups of formulae II and III, but preferably no end group of formula IV and no structural units of formulae VIa and VIb.

15. Process for the manufacture of the polyester according to at least one of claims 1 to 13, wherein
a) terephthalic acid dimethylester,
b) propylene glycol or ethylene glycol and propylene glycol,
c) polyethylene glycol monomethyl ether with a weight-average molecular weight in the range between 500 and 1555 g/mol, preferably between 500 and 800 g/mol and very preferred of 550 g/mol or of 750 g/mol, determined by size exclusion chromatography,
d) isethionic acid or one of its salts, preferably its alkali or alkaline earth metal salts and/or
e) sulfobenzoic acid, salts, preferably its alkali or alkaline earth metal salts, preferably 3-sulfobenzoic acid sodium salt
f) optionally sulfoisophthalic acid dimethylester and
g) optionally 1,4-cyclohexane dicarboxylic acid dimethylester
are reacted with one another wherein preferably besides components a), b), c) and d) or besides the components a), b), c) and e) or besides the components a), b), c), d) and e) at least one of the components f) and/or g) are additionally reacted.

16. The process according to claim 15, wherein the mixture of monomers a) and b) and of components c) and d) and/or e) additionally contains at least one of the monomers
sulfoisophthalic acid dimethylester, preferably 5-sulfoisophthalic acid dimethylester, and/or
1,4-cyclohexane dicarboxylic acid or one of its salts, preferably one of its alkali or alkaline earth metal salts, and/or
a crosslinker.

17. Use of the polyester according to at least one of the claims 1 to 14 in washing and cleaning agents, in textile care products and in products for textilie finishing.

18. Use of the polyester according to at least one of claims 1 to 14 as soil-release polymers.

## Revendications

1. Polyesters contenant les unités structurelles de la formule la et des groupes terminaux de la formule II et de la formule III ou des groupes terminaux de la formule II et de la formule IV ou des groupes terminaux de la formule II, III et IV ou contenant les unités structurelles de la formule la et de la formule Ib et des groupes terminaux de la formule II et de la formule III ou des groupes terminaux de la formule II et de la formule IV ou des groupes terminaux de la formule II, III et IV 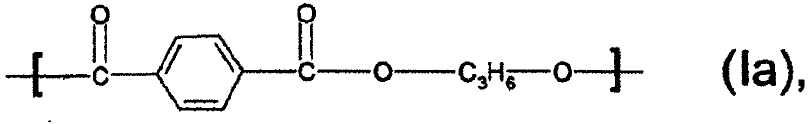 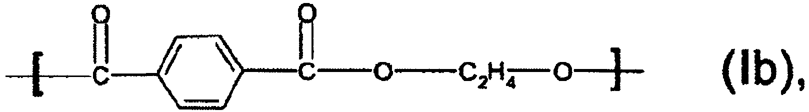 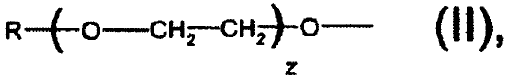
(Mⁱ⁺)ₓ-O₃S-CH₂-CH₂-O- (III), 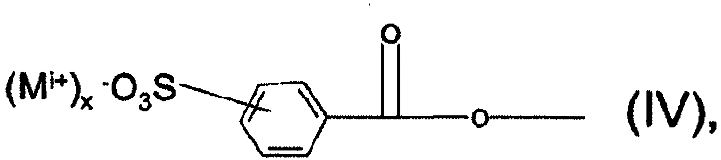
dans lesquelles R est alkyle en C₁-C₄,
M signifie hydrogène ou un cation monovalent ou bivalent,
i est 1 ou 2,
x signifie 0,5 ou 1 et le produit i · x est = 1, et
z signifie un nombre entier de 10 à 35.

2. Polyesters selon la revendication 1, **caractérisés en ce que** ceux-ci contiennent, outre les unités structurelles de la formule la ou des formules la et Ib et les groupes terminaux des formules II et III ou des formules III et IV ou des formules II, III et IV, les unités structurelles de la formule Va et/ou de la formule Via ou les unités structurelles des formules Va et Vb et/ou des formules Via et VIb 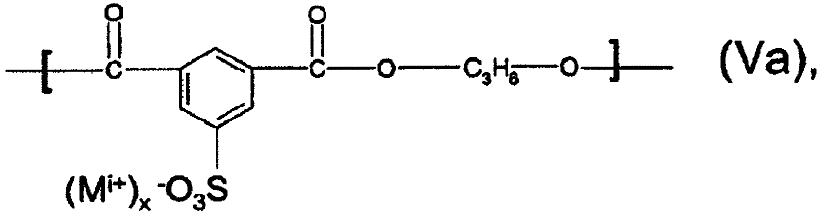 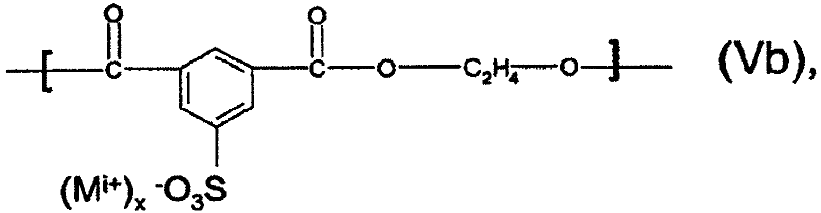 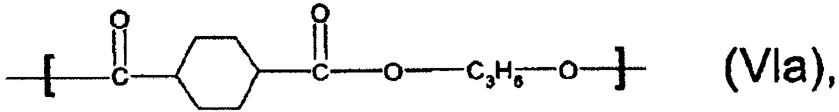 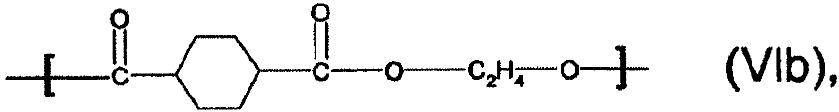
dans lesquelles M signifie hydrogène ou un cation monovalent ou bivalent,
i est 1 ou 2,
x signifie 0,5 ou 1 et le produit i · x est = 1.

3. Polyesters selon au moins une des revendications 1 ou 2, **caractérisés en ce que** ceux-ci présentent une moyenne pondérale du poids moléculaire de 2000 à 20 000 g/mole, déterminé au moyen d'une chromatographie d'exclusion diffusion.

4. Polyesters selon au moins une des revendications 1 à 3, **caractérisés en ce que** ceux-ci contiennent >4 unités de la formule la ou conjointement des formules la et Ib, tout particulièrement avec >=6 unités de la formule la ou conjointement des formules la et Ib, dans la molécule.

5. Polyesters selon au moins une des revendications 1 à 4, **caractérisés en ce que** ceux-ci contiennent les unités structurelles de la formule la ou des formules la et Ib et des groupes terminaux de la formule II, dans lesquelles R est un groupe méthyle et l'indice z représente un nombre de 10 à 35, de préférence de 10 à 20, de manière particulièrement préférée de 12 à 18.

6. Polyesters selon au moins une des revendications 1 à 5, **caractérisés en ce que** ceux-ci contiennent les unités structurelles de la formule la ou des formules la et Ib et des groupes terminaux de la formule II et des groupes terminaux de la formule III.

7. Polyesters selon au moins une des revendications 1 à 6, **caractérisés en ce que** ceux-ci contiennent les unités structurelles de la formule la ou des formules la et Ib et des groupes terminaux des formules II, III et IV.

8. Polyesters selon au moins une des revendications 1 à 7, **caractérisés en ce que** ceux-ci contiennent les unités structurelles de la formule la ou des formules la et Ib et des groupes terminaux de la formule II et III, dans lesquels ces groupes terminaux sont dérivés de la conversion avec de l'éther monométhylique de polyéthylèneglycol et de l'acide iséthionique ou un de ses sels dans le rapport molaire II sur III de 1 sur 50 à 50 sur 1, de préférence de 10 sur 10 à 10 sur 1, de manière particulièrement préférée de 1 sur 5 à 5 sur 1.

9. Polyesters selon au moins une des revendications 2 à 8, **caractérisés en ce que** ceux-ci contiennent les unités structurelles des formules la et Va ou les unités structurelles des formules la, Ib, Va et Vb.

10. Polyesters selon au moins une des revendications 2 à 9, **caractérisés en ce que** les unités structurelles des formules la et Va sont présentes dans le rapport molaire I sur V de 1 sur 1 à 10 sur 1, de préférence de 2 sur 1 à 5 sur 1 ou que les unités structurelles des formules la, Ib, Va et Vb sont présentes dans le rapport molaire la + Ib sur Va + Vb de 1 sur 1 à 10 sur 1, de préférence de 2 sur 1 à 5 sur 1.

11. Polyesters selon au moins une des revendications 1 à 10, **caractérisés en ce que** les groupes -SO₃⁻(Mⁱ⁺)ₓ dans le groupe terminal de la formule IV se trouve à la position 3 et M est hydrogène ou un cation de métal alcalin, i est = 1 et x est = 1.

12. Polyesters selon au moins une des revendications 1 à 11, **caractérisés en ce que** ceux-ci contiennent des groupes terminaux de la formule II, dans laquelle R est un groupe méthyle et l'indice z représente un nombre de 10 à 20 et de préférence de 12 à 18.

13. Polyesters selon au moins une des revendications 1 à 12, **caractérisés en ce que** ceux-ci sont non réticulées.

14. Polyesters selon au moins une des revendications 2 à 13, **caractérisés en ce que** ceux-ci contiennent des unités structurelles des formules la et Va et des groupes terminaux des formules II et III, mais de préférence aucun groupe terminal de la formule IV et aucune unité structurelle de la formule VIa, ou des unités structurelles des formules la, Ib, Va et Vb et des groupes terminaux de la formule II et III, mais de préférence aucun groupe terminal de la formule IV et aucune unité structurelle des formules VIa et VIb.

15. Procédé de fabrication des polyesters selon au moins une des revendications 1 à 13, **caractérisé en ce que**
a) de l'ester diméthylique d'acide téréphtalique,
b) du propylèneglycol ou de l'éthylèneglycol et du propylèneglycol,
c) de l'éther monométhylique de polyéthylèneglycol avec un poids moléculaire moyen en poids dans la plage de 500 à 1555 g/mole, de préférence de 500 à 800 g/mole et notamment de 550 g/mole ou de 750 g/mole, déterminé au moyen d'une chromatographie d'exclusion diffusion,
d) de l'acide iséthionique ou un de ses sels, notamment ses sels de métal alcalin, alcalino-terreux et/ou
e) de l'acide sulfobenzoïque, des sels, notamment ses sels de métal alcalin, alcalino-terreux, de préférence l'acide 3-sulfobenzoïque, sel de Na,
f) éventuellement de l'ester diméthylique d'acide sulfoisophtalique et
g) éventuellement de l'ester diméthylique d'acide 1,4-cyclohexanedicarboxylique
sont convertis les uns avec les autres, dans lequel au moins un des composants f) et/ou g) s'ajoutent de préférence en outre à la conversion, outre les composants a), b), c) et d) ou outre les composants a), b), c) et e) ou outre les composants a), b), c), d) et e).

16. Procédé selon la revendication 15, **caractérisé en ce que** le mélange des monomères a) et b) et des composants c) et d) et/ou e) contient encore au moins un des monomères
ester diméthylique d'acide sulfoisophtalique, de préférence ester diméthylique d'acide 5-sulfoisophtalique, et/ou
acide 1,4-cyclohexanedicarboxylique ou un de ses sels, notamment ses sels de métal alcalin ou alcalino-terreux, et/ou
agent de réticulation.

17. Utilisation des polyesters selon au moins une des revendications 1 à 14 dans des détergents et produits de lavage et de nettoyage, produits d'entretien du textile et agents pour l'équipement de textiles.

18. Utilisation des polyesters selon au moins une des revendications 1 à 14 en tant que polymères anti-tache.
